# EUROPÄISCHE PATENTANMELDUNG

(11) **EP 1 676 632 A1**
(43) Veröffentlichungstag der Anmeldung: **05.07.2006**
(21) Anmeldenummer: 04030883.5
(22) Anmeldetag: 28.12.2004
(51) Int. Cl.: B01J 19/00, F28F 3/00, F28F 3/04

(54) **Verfahren zur Herstellung von Polymeren**

(71) Anmelder: Covion Organic Semiconductors GmbH, 65926 Frankfurt am Main (DE)
(72) Erfinder: Schulte, Niels Dr, 65779, Kelkheim (DE); Breuning, Esther, Dr., 65527, Niedernhausen (DE); Spreitzer, Huber Dr., 69519, Viernheim (DE)

(57) **Zusammenfassung**

Diese Erfindung bezieht sich auf ein Verfahren zur Herstellung von Polymeren durch übergangmetallkatalysierte Polykondensation. Vor allem auf dem stark wachsenden Gebiet der organischen Halbleiter sind diese Polymere von herausragender Bedeutung. Die durch das erfindungsgemäße Verfahren erhaltenen Polymere lassen sich mit größerer Reproduzierbarkeit und höherer Reinheit herstellen als gemäß dem Stand der Technik.

## Beschreibung

Konjugierte bzw. auch teilkonjugierte Polymere spielen auf dem Gebiet der organischen Halbleiter (z. B. für Anwendungen in polymeren Leuchtdioden, organischen Transistoren, organischen ICs, organischen Solarzellen, organischen Laserdioden, etc.) eine zunehmend wichtige Rolle. Typische Klassen dieser Polymere umfassen Poly-arylenvinylene (z. B. gemäß EP 0443861, WO 94/20589, WO 98/27136, EP 1025183, WO 99/24526 und EP 0964045), Poly-arylenacetylene oder Poly-arylene im weitesten Sinne. Typische Vertreter der Poly-arylene sind u. a. Polyfluorene (z. B. gemäß EP 842208 oder WO 00/22026), Poly-spirobifluorene (z. B. gemäß EP 707020 oder EP 894107), Poly-para-phenylene (z. B. gemäß WO 92/18552), Polycarbazole (z. B. gemäß WO 04/070772 oder DE 10328627.6), Poly-dihydrophenanthrene (z. B. gemäß DE 10337346.2), Poly-indenofluorene (z. B. gemäß WO 04/041901 oder EP 03014042.0), Poly-phenanthrene (z. B. gemäß DE 102004020298.2) oder Polythiophene (z. B. gemäß EP 1028136) oder auch Copolymere, die verschiedene dieser Einheiten enthalten. Es können auch noch weitere Wiederholeinheiten vorhanden sein, die Aufgaben wie Ladungstransport oder Emission wahrnehmen. Dabei können die Polymere konjugiert, teilkonjugiert oder nicht-konjugiert sein.

Für die Herstellung konjugierter, teilkonjugierter oder nicht-konjugierter Poly-arylene haben sich verschiedene übergangsmetallkatalysierte Kupplungsreaktionen als geeignet erwiesen, insbesondere die Kupplung gemäß Suzuki (z. B. gemäß WO 03/048225, WO 99/20675 oder WO 00/53656) und die Kupplung gemäß Yamamoto (z. B. gemäß WO 04/022626), aber auch weitere Kupplungsreaktionen, beispielsweise die Kupplung gemäß Hartwig-Buchwald (z. B. J. F. Hartwig, *Angew. Chem. Inf. Ed.* **1998,** *37*, 2047-2067), wenn es sich um Polymere mit Arylamingruppen handelt.

Diese Verfahren sind zum Teil schon relativ weit ausgearbeitet, so dass damit Polymere mit hohem Polymerisationsgrad erhalten werden können; jedoch weisen alle diese Verfahren verschiedene Probleme auf, so dass sie noch nicht als technologisch und ökologisch befriedigend angesehen werden können:
1) Alle diese Verfahren arbeiten mit großen Mengen organischer Lösemittel, die ökologisch bedenklich sind und im großen Maßstab eingesetzt ein Sicherheitsrisiko mit sich bringen. Hier wäre es wünschenswert, die Lösemittelmengen deutlich reduzieren zu können, um die Sicherheit für Mensch und Umwelt zu erhöhen.
2) Die Polykondensation gemäß dem Stand der Technik führt noch nicht zu völlig reproduzierbaren Ergebnissen, was wiederum einen Einfluss auf die elektronischen Eigenschaften bei der Herstellung der oben genannten elektronischen Vorrichtungen hat. So sind die Eigenschaften der Polymere beispielsweise vom Molekulargewicht, von Fehlstellen im Polymer und von den Endgruppen abhängig. Diese sind jedoch nach den Prozessen gemäß dem Stand der Technik noch nicht ausreichend genau kontrollierbar. Hier ist eine bessere Kontrolle erstrebenswert, um eine bessere Reproduzierbarkeit zu gewährleisten.
3) Für die Aufbringung der Polymere durch Drucktechniken, beispielsweise durch Tintenstrahldruck (InkJet-Printing), muss das Molekulargewicht des Polymers sehr genau eingestellt werden. Eine derartig genaue Kontrolle des Molekulargewichts bei der Reaktion ist mit den Methoden gemäß dem Stand der Technik bislang nicht möglich, so dass die Polymere nach der Reaktion häufig aufwändig nachbehandelt werden müssen (z. B. gemäß WO 03/019694), was jedoch meist mit einer Verschlechterung der elektronischen Eigenschaften einhergeht.
4) Die Polydispersität der nach dem Stand der Technik erhaltenen Polymere ist bislang noch meist deutlich höher als die theoretisch erreichbare Polydispersität von 2. Eigene Ergebnisse haben jedoch gezeigt, dass Polymere mit einer höheren Polydispersität im Allgemeinen schlechtere Eigenschaften in der elektronischen Vorrichtung aufweisen, so dass hier eine Verbesserung erstrebenswert ist.
5) Die Reinheit der nach dem Stand der Technik erhaltenen Polymere, insbesondere der Gehalt an anorganischen Verunreinigungen, ist bislang noch nicht zufriedenstellend. Es ist jedoch bekannt, dass für die Verwendung in organischen elektronischen Vorrichtungen reinere Polymere bessere Ergebnisse zeigen.

Hieraus ist ersichtlich, dass immer noch ein deutlicher Verbesserungsbedarf bei Polykondensationsverfahren durch übergangsmetallkatalysierte Kupplungsreaktionen besteht.

Wir haben nun überraschend festgestellt, dass die oben genannten Probleme deutlich reduziert werden können bzw. völlig entfallen, wenn die entsprechende Polykondensation in einem Mikroreaktor durchgeführt wird. Der Aufbau von Mikroreaktoren ist beispielsweise in DD 246257 beschrieben. Eine Übersicht über Reaktionen in Mikroreaktoren geben beispielsweise K. Jähnisch *et al.* (*Angew. Chem.* **2004,** *116*, 410-451). Hierbei fällt auf, dass zwar bereits übergangsmetallkatalysierte Reaktionen, beispielsweise Kupplungen gemäß Suzuki oder gemäß Heck, im Mikroreaktor beschrieben sind, jedoch keine entsprechenden übergangsmetallkatalysierten Polykondensationen. Dies ist überraschend, da insbesondere die Poly-Suzuki-Reaktion, aber auch die Poly-Yamamoto-Reaktion oder die Poly-Hartwig-Buchwald-Reaktion, große Bedeutung zur Synthese konjugierter Polymere hat und auch zur Synthese teilkonjugierter oder nicht-konjugierter Polymere angewandt werden kann. Dies legt die Vermutung nahe, dass derartige Reaktionen, möglicherweise wegen der Entstehung hochviskoser Polymerlösungen und steifer, stäbchenförmiger Polymere, nicht im Mikroreaktor durchgeführt werden könnten. Daher ist es nun besonders überraschend und unerwartet, dass diese Reaktion trotz der engen Kanäle des Mikroreaktors deutlich besser und schneller abläuft als bei Standardreaktion gemäß dem Stand der Technik im Glaskolben oder im großtechnischen Maßstab im Kessel und zu Polymeren mit deutlich verbesserten Eigenschaften führt. Weiterhin lässt sich die Reaktion im Mikroreaktor mit größerer Reproduzierbarkeit durchführen und das Molekulargewicht genauer einstellen, und die Polymere können in größerer Reinheit erhalten werden.

Gegenstand der Erfindung ist somit ein Verfahren zur Herstellung von Polymeren oder Oligomeren durch C-C- oder C-N-Kupplungsreaktionen unter Übergangsmetallkatalyse in einem Lösemittel oder Lösemittelgemisch gegebenenfalls unter Zusatz mindestens einer Base und/oder mindestens eines Additivs, dadurch gekennzeichnet, dass die Reaktion in einem Mikroreaktor durchgeführt wird.

Ein Mikroreaktor im Sinne dieser Erfindung ist eine mikrosystemtechnische Apparatur mit einem Volumen ≤ 1000 µl, bevorzugt ≤ 100 µl, besonders bevorzugt ≤ 50 µl. Dieser enthält mindestens zwei Eingänge und mindestens einen Ausgang, mindestens ein Mischelement, in dem die Eduktlösungen wenigstens einmal intensiv vermischt werden, mindestens eine Reaktionsstrecke (= Verweilstrecke), bevorzugt eine Kapillare, besonders bevorzugt eine temperierbare Kapillare, potenziell mindestens ein Analysenelement und potenziell mindestens ein Entmischelement. Die Eingänge sind über Pumpen und Schläuche zugänglich. In die Verweilstrecke werden die Lösungen nach ihrer Durchmischung in einem Mischelement zur Verlängerung ihrer Verweilzeit geführt. Die Verweilzeit im Sinne dieser Erfindung ist die Zeit zwischen der Durchmischung der Monomere und gegebenenfalls weiterer Komponenten und der Aufarbeitung der resultierenden Reaktionslösung zur Reinigung und Isolierung des Polymers.

Es kommen verschiedene Materialien für den Bau des Mikroreaktors in Frage. Insbesondere eignen sich dafür Glas, Edelstahl, Keramik, Emaille, PTFE und PFA.

Die Kanäle des Mikroreaktors weisen bevorzugt einen Durchmesser von 10 bis 2000 µm, besonders bevorzugt von 100 bis 2000 µm, ganz besonders bevorzugt von 200 bis 1000 µm auf. Dabei können die Kanäle sowohl rund als auch eckig sein oder auch andere Formen aufweisen, wobei die Größen unabhängig von der Form in ähnlichen Dimensionen liegen.

Bevorzugt werden die Lösungen so in den Mikroreaktor gepumpt, dass sie diesen mit einer Durchflussgeschwindigkeit von 0.01 µl/min bis 100 ml/min durchströmen. Dabei wird die Durchflussgeschwindigkeit und daher auch der Druck bevorzugt so angepasst, dass die Verweilzeit der Lösung im Reaktor ausreicht, um einen vollständigen Umsatz der Monomere zu gewährleisten und das gewünschte Molekulargewicht der Polymere einzustellen.

Der Mikroreaktor ist erfindungsgemäß bevorzugt temperierbar. Weiterhin verfügt er potenziell über die Möglichkeit zur Ultraschall-Behandlung, zur Mikrowellenbestrahlung und/oder zur photochemischen Bestrahlung.

Die erforderliche Verweilzeit bei dem erfindungsgemäßen Verfahren hängt von verschiedenen Parametern ab, wie z. B. der Temperatur, der Reaktivität der Edukte oder der Viskosität der Lösung. Dem Fachmann ist es möglich, diese Verweilzeit an die einzelnen Parameter anzupassen und so einen optimalen Reaktionsverlauf zu erzielen. So kann die Verweilzeit der Reaktionslösung in dem zum Einsatz kommenden System durch die Wahl der Durchflussgeschwindigkeit der Lösungen und durch deren Konzentration (und damit Viskosität) eingestellt werden.

Das Reaktionsgemisch kann bevorzugt durch zwei oder mehr in Reihe geschaltete Mikroreaktoren geführt werden. Hierdurch wird erreicht; dass auch bei erhöhter Durchflussgeschwindigkeit die Verweilzeit verlängert wird und die eingesetzten Monomere so umgesetzt werden, dass eine optimale Produktausbeute und das gewünschte Molekulargewicht der Polymere erreicht wird. Durch weitere in Reihe geschaltete Mikroreaktoren lässt sich auch in einem oder mehreren Folgeschritten die Reaktion direkt aufarbeiten, beispielsweise durch Extraktion und/oder Waschen der Reaktionslösung.

In einer anderen bevorzugten Ausführungsform der Erfindung wird die Zahl und die Anordnung der Kanäle in einem oder mehreren Mikroreaktor(en) so variiert, dass die Verweilzeit verlängert wird, so dass auch hier bei erhöhter Durchflussgeschwindigkeit ein optimaler Umsatz und das gewünschte Molekulargewicht des Polymers erreicht wird.

In einer weiteren bevorzugten Ausführungsform der Erfindung wird das Reaktionsgemisch durch zwei oder mehr parallel angeordnete Mikroreaktoren geleitet, um den Durchsatz zu erhöhen.

Bevorzugt beträgt die Verweilzeit der Reaktionslösung im Mikroreaktor ≤ 1 Stunde, besonders bevorzugt ≤ 10 Minuten, ganz besonders bevorzugt ≤ 1 Minute. Dabei fällt auf, dass die Reaktionszeit bei Polykondensation im Mikroreaktor deutlich niedriger liegt als bei Polykondensation gemäß dem Stand der Technik im Labormaßstab. So können auch schon bei einer Verweilzeit von nur wenigen Minuten oder sogar weniger als einer Minute ein vollständiger Umsatz und ein hohes Molekulargewicht erzielt werden.

Das erfindungsgemäße Verfahren kann in einem breiten Temperaturbereich durchgeführt werden, der im Wesentlichen durch die Temperaturbeständigkeit der zum Bau des Mikroreaktor-Systems eingesetzten Materialien und durch die physikalischen Eigenschaften der eingesetzten Lösungen begrenzt ist. Vorzugsweise wird das erfindungsgemäße Verfahren bei einer Temperatur von -80 bis +250 °C durchgeführt, besonders bevorzugt von 0 bis 200 °C, ganz besonders bevorzugt von 40 bis 130 °C. Erhöhte Temperaturen sind zu bevorzugen, da bei der Reaktion hochviskose Polymerlösungen entstehen. Bei erhöhter Temperatur sinkt deren Viskosität, und ein Transport der Lösung durch die Kanäle des Reaktors und der Kapillaren kann leichter erfolgen. Außerdem benötigt man meist eine leichte thermische Aktivierung der Reaktion, da das Verfahren in der Regel nur schwach exotherm ist.

Das erfindungsgemäße Verfahren zur Polykondensation organischer Verbindungen durch übergangsmetallkatalysierte Kupplungsreaktionen wird üblicherweise unter einer Schutzgasatmosphäre, bevorzugt Stickstoff und/oder Argon, durchgeführt. Es kann aber auch ohne Verwendung einer Schutzgasatmosphäre durchgeführt werden.

Das erfindungsgemäße Verfahren kann sowohl kontinuierlich als auch diskontinuierlich durchgeführt werden. Vorzugsweise wird es kontinuierlich durchgeführt.

Für die Durchführung des erfindungsgemäßen Verfahrens ist es erforderlich, die Reaktion möglichst in homogener oder mehrphasiger flüssiger Phase durchzuführen, die keine oder nur sehr kleine Feststoffpartikel enthält, da sonst die Kanäle der Mikroreaktoren verstopfen können.

Der Reaktionverlauf kann mit verschiedenen analytischen Methoden verfolgt und gesteuert werden. So kann der Mikroreaktor mit verschiedenen Sensoren bzw. Messfühlern ausgestattet sein. Vorzugsweise wird der Reaktionsverlauf durch Viskosimetrie verfolgt und gesteuert. Die Steuerung der Reaktion erfolgt bevorzugt über die Regelung der Temperatur und/oder gegebenenfalls über weiteres Zudosieren von Katalysatorlösung. Dabei ist die gemessene Viskosität der Lösung ein Maß für den Polymerisationsgrad und damit das Molekulargewicht des Polymers. Die Kontrolle der Reaktion ist bei Reaktionsführung im Mikroreaktor deutlich besser im Vergleich zu bekannten Verfahren gemäß dem Stand der Technik. Dadurch erhöht sich die Reproduzierbarkeit erheblich. Weitere mögliche analytische Methoden sind GPC, Sedimentation, Dampfdruckosmose, Lichtstreuung, Röntgenkleinwinkelstreuung und Endgruppen-NMR. Weiterhin kann der Mikroreaktor über Fenster verfügen, beispielsweise für UV/vis-Spektroskopie, IR-Spektroskopie, Lichtstreuung und/oder Mikroskopie.

Nach der Reaktion wird das Polymer aus dem Reaktionsgemisch aufgearbeitet und isoliert. Dies kann einerseits nach herkömmlichen Methoden geschehen, indem die Reaktionslösung aus dem Mikroreaktor gesammelt und batchweise aufgearbeitet wird. Die Reaktionslösung kann jedoch auch direkt im Mikroreaktor bzw. in einem weiteren angekoppelten Mikroreaktor extrahiert und aufgearbeitet werden und muss nach der Aufarbeitung und Extraktion nur noch isoliert, eingedampft, sprühgetrocknet oder bevorzugt batchweise gefällt werden. Bevorzugt erfolgt die Extraktion und Aufarbeitung ebenfalls in einem Mikroreaktor.

Bei der Reaktion entsteht das Polymer durch eine Polykondensationsreaktion, also durch eine Reaktion, bei der bei jedem Reaktionsschritt ein kleines Molekül unter Bildung einer neuen Bindung zwischen den Monomeren abgespalten wird. Je nach Struktur der Monomere können dabei konjugierte, teilkonjugierte oder nicht-konjugierte Polymere entstehen. Konjugierte Polymere im Sinne dieser Erfindung sind Polymere, die in der Hauptkette hauptsächlich sp²-hybridisierte Kohlenstoffatome, die auch durch entsprechende Heteroatome ersetzt sein können, enthalten. Dies bedeutet im einfachsten Fall abwechselndes Vorliegen von Doppel-und Einfachbindungen in der Hauptkette. Hauptsächlich meint, dass natürlich auftretende Defekte, die zu Konjugationsunterbrechungen führen, den Begriff "konjugiertes Polymer" nicht entwerten. Hingegen würden Einheiten wie beispielsweise einfache Alkylbrücken, (Thio)Ether-, Ester-, Amid- oder Imidverknüpfungen eindeutig als nicht-konjugierte Segmente definiert. Unter einem teilkonjugierten Polymer wird ein Polymer verstanden, in dem längere konjugierte Abschnitte in der Hauptkette durch nicht-konjugierte Abschnitte unterbrochen sind, bzw. das längere konjugierte Abschnitte in den Seitenketten eines in der Hauptkette nicht-konjugierten Polymers enthält. Bevorzugt dient das erfindungsgemäße Verfahren der Herstellung konjugierter und teilkonjugierter Polymere.

Die Polymere weisen in der Regel 10 bis 10000, bevorzugt 50 bis 5000, besonders bevorzugt 50 bis 2000 Wiederholeinheiten auf. Dabei ist für die Polymere charakteristisch, dass sie eine Molekulargewichtsverteilung aufweisen, also eine Polydispersität. Die Polydispersität ist bevorzugt kleiner 10, besonders bevorzugt kleiner 5, ganz besonders bevorzugt kleiner 3.

Unter einer übergangsmetallkatalysierten C-C- bzw. C-N-Kupplungsreaktion im Sinne dieser Erfindung wird eine Kupplung zweier organischer Verbindungen unter Bildung einer neuen C-C- bzw. C-N-Bindung unter Katalyse eines Übergangsmetalls bzw. einer Übergangsmetallverbindung gegebenenfalls unter Zusatz mindestens einer Base und/oder mindestens eines weiteren Additivs verstanden, wobei von jeder der beiden organischen Verbindungen eine reaktive Gruppe abgespalten wird. Bevorzugt ist das Übergangsmetall bzw. die Übergangsmetallverbindung ausgewählt aus Palladium bzw. Palladiumverbindungen, Nickel bzw. Nickelverbindungen, Cobalt bzw. Cobaltverbindungen oder Eisen bzw. Eisenverbindungen. Besonders bevorzugt sind Palladium bzw. Palladiumverbindungen oder Nickel bzw. Nickelverbindungen. Für die Bildung von Polymeren ist es dabei erforderlich, dass jedes Monomer mindestens zwei reaktive Gruppen trägt, die in der Kupplungsreaktion miteinander oder mit den reaktiven Gruppen eines anderen Monomers zur Reaktion gebracht werden können. Eine reaktive Gruppe im Sinne der vorliegenden Erfindung ist jede Gruppe, deren Bindung zu einem Kohlenstoffatom bzw. einem Stickstoffatom des Monomers im Verlauf der Kupplungsreaktion gespalten wird und welche dann aus dem Monomer austritt. Dies kann auch ein einzelnes Atom, z. B. ein Halogen oder ein Wasserstoffatom sein.

Als Monomere, die wenigstens zwei reaktive Gruppen aufweisen, können bei dem erfindungsgemäßen Verfahren alle dem Fachmann als Monomere derartiger Kupplungsreaktionen bekannten organischen Verbindungen mit wenigstens zwei reaktiven Gruppen eingesetzt werden. Dabei kommen als reaktive Gruppen die unten unter X und Y näher ausgeführten Gruppen in Frage.

Dabei folgt die Polykondensationsreaktion bevorzugt der in Schema 1 oder Schema 2 dargestellten Reaktion:

n X-Ar-X + n Y-M-Y → ---[Ar-M]ₙ--- + X-Y (Schema 1)

n X-Ar-(M)ₘ-Y → ---[Ar-(M)ₘ]ₙ--- (Schema 2)

wobei die verwendeten Symbole und Indizes die folgende Bedeutung haben:
- X: ist bei jedem Auftreten gleich oder verschieden Chlor, Brom, lod, Fluoralkylsulfonat oder Perfluoralkylsulfonat, z. B. Trifluormethansulfonat oder Nonafluorbutansulfonat;
- Y: ist bei jedem Auftreten gleich oder verschieden X oder B(OH)₂, B(OR)₂, BR₂, SnR₃, NR-H, MgCl, MgBr, Mgl, SiR₂F, SiRF₂, ZnCl, ZnBr, Znl oder auch H, falls dieses direkt an eine vinylische oder acetylenische Bindung von M gebunden ist;
- Ar: ist bei jedem Auftreten gleich oder verschiedenen ein bivalentes aromatisches oder heteroaromatisches Ringsystem mit 2 bis 60 C-Atomen, welches auch durch einen oder mehrere Reste F, Cl, Br, I, R oder OR substituiert sein kann;
- M: ist bei jedem Auftreten gleich oder verschieden eine Gruppe Ar, oder M ist gleich oder verschieden eine organische Gruppe mit 1 bis 60 C-Atomen, bevorzugt eine Gruppe Ar, die durch eine oder mehrere Vinyl- oder Acetylengruppen substituiert ist;
- R: ist bei jedem Auftreten gleich oder verschieden H, eine geradkettige, verzweigte oder cyclische Alkylkette mit 1 bis 40 C-Atomen, in der auch ein oder mehrere nicht benachbarte C-Atome durch N-R¹, O, S, O-CO-O, CO-O, -CR¹=CR¹-, -C≡C- ersetzt sein können und in der auch ein oder mehrere H-Atome durch F, Cl, Br, I oder CN ersetzt sein können, oder ein aromatisches oder heteröaromatisches Ringsystem mit 2 bis 60 C-Atomen, welches auch durch einen oder mehrere nicht-aromatische Reste R substituiert sein kann; dabei können auch zwei oder mehrere der Reste R miteinander ein Ringsystem bilden;
- R¹: ist bei jedem Auftreten gleich oder verschieden H oder ein aliphatischer oder aromatischer Kohlenwasserstoffrest mit 1 bis 20 C-Atomen;
- n: ist bei jedem Auftreten eine Zahl zwischen 10 und 10000;
- m: ist bei jedem Auftreten 0 oder 1;
die gestrichelte Bindung bedeutet dabei die Verknüpfung in die Polymerkette.

Ebenso ist es möglich, dass die Monomere mehr als zwei reaktive Gruppen X und/oder Y tragen. Derartige Monomere führen zur Verzweigung der Polymerkette. Weiterhin ist es möglich, Verbindungen mit nur einer reaktiven Gruppe X oder Y zuzusetzen. Derartige Verbindungen werden an das Ende der Polymerkette eingebaut.

Unter einem aromatischen bzw. heteroaromatischen Ringsystem im Sinne dieser Erfindung soll ein System verstanden werden, das nicht notwendigerweise nur aromatische bzw. heteroaromatische Gruppen enthält, sondern in dem auch mehrere aromatische bzw. heteroaromatische Gruppen durch eine kurze nicht-aromatische Einheit (< 10 % der von H verschiedenen Atome, bevorzugt < 5 % der von H verschiedenen Atome), wie beispielsweise sp³-hybridisierter C, N, etc., aber auch C=O etc. unterbrochen sein können. So sollen also beispielsweise auch Systeme wie 9,9'-Spirobifluoren, 9,9-Diarylfluoren, Triarylamin, Diarylether, etc. als aromatische Ringsysteme verstanden werden. Weiterhin wird im Sinne dieser Erfindung auch der Einbau von Keto-, Phosphinoxid-, Sulfoxid- und Sulfongruppen als aromatisch im Sinne dieser Erfindung betrachtet, ebenso wie der Einbau von Metallkomplexen mit aromatischen Liganden.

Im Rahmen der vorliegenden Erfindung werden unter einer C₁- bis C₄₀-Alkylgruppe, in der auch einzelne H-Atome oder CH₂-Gruppen durch die oben genannten Gruppen substituiert sein können, bevorzugt die Reste Methyl, Ethyl, n-Propyl, i-Propyl, n-Butyl, i-Butyl, s-Butyl, t-Butyl, n-Pentyl, s-Pentyl, Cyclopentyl, n-Hexyl, Cyclohexyl, n-Octyl, Cyclooctyl, 2-Ethylhexyl, 4-Ethylhexyl, 1,1,5-Trimethylheptyl, 1-Ethyl-1,5-dimethylhexyl, Trifluormethyl, Pentafluorethyl, 2,2,2-Trifluorethyl, Ethenyl, Propenyl, Butenyl, Pentenyl, Cyclopentenyl, Hexenyl, Cyclohexenyl, Octenyl, Cyclooctenyl, Ethinyl, Propinyl, Butinyl, Pentinyl, Hexinyl oder Octinyl verstanden. Unter einem C₂- bis C₆₀-aromatischen oder heteroaromatischen Ringsystem werden besonders bevorzugt Phenyl, Biphenyl, Naphthyl, Anthracenyl, Triphenylenyl, [1,1';3',1"]-Terphenyl-2'-yl, Binaphthyl, Phenanthrenyl, Fluorenyl, Spirobifluorenyl, Dihydrophenanthrenyl, Pyrenyl, Dihydropyrenyl, Tetrahydropyrenyl, 2-Pyridyl, 3-Pyridyl, 4-Pyridyl, 2-Pyrimidyl, 4-Pyrimidyl, 5-Pyrimidyl, 2-Pyrazinyl, 3-Pyridazinyl, 4-Pyridazinyl, Chinolinyl, Isochinolinyl, Chinoxalinyl, Acridinyl, Benzochinolinyl, Benzoisochinolinyl, 2-Thienyl, 3-Thienyl, 2-Furanyl, 3-Furanyl, 2-Pyrrolyl, 3-Pyrrolyl, Benzothiadiazolyl, Indolyl, Isoindolyl, Pentafluorophenyl, Tetrafluorophenyl, 3,5-Bistrifluoromethylphenyl, Heptafluoronaphthyl, o-Tolyl, m-Tolyl, p-Tolyl, 2,6-Dimethylphenyl, 2,6-Diethylphenyl, 2,6-Di-i-propylphenyl, 2,6-Di-t-butylphenyl, o-t-Butylphenyl, m-t-Butylphenyl oder p-t-Butylphenyl verstanden, die auch durch die oben genannten Reste R¹ substituiert sein können.

In einer bevorzugten Ausführungsform der Erfindung sind bei einer Reaktion alle Gruppen X gleich gewählt und alle Gruppen Y gleich gewählt.

X ist bevorzugt Br oder I, besonders bevorzugt Br.

Y ist bevorzugt X oder B(OR)₂, BR₂, SnR₃, SiR₂F oder SiRF₂, wobei R eine aliphatische Gruppe darstellt, oder NR-H, wobei R eine aromatische oder aliphatische Gruppe darstellt, oder B(OH)₂, MgCl, MgBr, Mgl, ZnCl, ZnBr, ZnI oder auch H, falls dieses direkt an eine vinylische oder acetylenische Bindung von M gebunden ist.

Die übergangsmetallkatalysierte Kupplungsreaktion ist bevorzugt ausgewählt aus der Gruppe der Suzuki-Kupplungen, der Yamamoto-Kupplungen, der Hartwig-Buchwald-Kupplungen, der Stille-Kupplungen, der Heck-Kupplungen, der Sonogashira-Kupplungen, der Negishi-Kupplungen, der Hiyama-Kupplungen und der Grignard-Kreuzkupplungen (Kumada-Kupplungen). Ein allgemeiner Überblick über diese Kupplungsreaktionen und die dafür üblicherweise verwendeten Reaktionsbedingungen findet sich in *Cross Coupling Reactions (Topics in Current Chemistry*, Ed. N. Miyaura, *219,* Springer-Verlag **2002**) und in *Metal-catalyzed Cross-coupling Reactions* (Ed. F. Diederich, P. J. Stang, Wiley-VCH, **1998**).

Als Katalysatoren können bei dem erfindungsgemäßen Verfahren alle dem Fachmann bekannten, für Kupplungsreaktionen organischer Verbindungen geeigneten homogenen und heterogenen Katalysatoren oder Gemische aus mindestens zwei dieser Katalysatoren eingesetzt werden. Dies sind, wie bereits erwähnt, insbesondere Katalysatoren basierend auf Palladium-Verbindungen bzw. metallischem Palladium oder auch auf Nickel-Verbindungen bzw. metallischem Nickel. Katalysatoren im Sinne der Erfindung umfassen auch in-situ gebildete Katalysatoren, d. h. Katalysatoren, die unmittelbar vor oder während der Kupplungsreaktion beispielsweise aus einer metallhaltigen Vorstufe des Katalysators bzw. einem Metallsalz, gegebenenfalls unter Zusatz eines oder mehrerer geeigneter Liganden, gebildet werden.

In einer bevorzugten Ausführungsform der vorliegenden Erfindung wird als Katalysator bzw. Katalysatorvorstufe wenigstens eine Verbindung eingesetzt, die Palladium in der Oxidationsstufe 0 enthält, gegebenenfalls in Gegenwart wenigstens eines Liganden. Vorzugsweise wird hier allgemein Tetrakis(triarylphosphin)palladium(0), insbesondere Tetrakis(triphenylphosphin)palladium(0) und Tetrakis(tri-o-tolylphosphin)palladium(0) eingesetzt, aber auch Tris(dibenzylidenaceton)dipalladium(0) (Pd₂dba₃) oder Tetrakis(tri-tert-butylphosphin)palladium(0).

Ebenfalls bevorzugt wird in dem erfindungsgemäßen Verfahren als Katalysator bzw. Katalysatorvorstufe wenigstens eine Verbindung, die Palladium in der Oxidationsstufe +II enthält, gegebenenfalls in Gegenwart wenigstens eines Liganden eingesetzt. Bevorzugt sind Palladium(II)halogenide, insbesondere Palladium(II)chlorid, Palladium(II)carboxylate, insbesondere Palladium(II)acetat, Dichlor-bis(triphenylphosphin)palladium(II), Palladium(II)-β-ketoketonate, insbesondere Palladium(II)acetylacetonat, Nitrilpalladium(II)halogenide, insbesondere Dichlor-bis(benzonitril)palladium(II), Allylpalladiumhalogenide, Olefinpalladiumhalogenide, insbesondere Dichlor(1,5-cyclooctadien)palladium(II), oder ein Gemisch aus wenigstens zwei dieser Verbindungen. Dabei ist es auch möglich, dass Palladium(II) während der Reaktion zu Palladium(0) reduziert wird.

Zu den Palladium(II)verbindungen werden bevorzugt Liganden zugesetzt. Dies sind insbesondere Phosphin-Liganden aus der Gruppe der Triarylphosphine, Triheteroarylphosphine, Diarylalkylphosphine, Diheteroarylalkylphosphine, Aryldialkylphosphine, Heteroaryldialkylphosphine oder Trialkylphosphine, wobei die Substituenten am Phosphor gleich oder verschieden, chiral oder achiral sein können, wobei ein oder mehrere der Substituenten die Phosphorgruppen mehrerer Phosphine verknüpfen können und wobei diese Verknüpfungen auch über ein oder mehrere Metallatome erfolgen können. Des Weiteren können Halogenphosphine, Dihalogenphosphine, Alkoxyphosphine, Aryloxyphosphine, Heteroaryloxyphosphine, Dialkoxyphosphine, Diaryloxyphosphine oder Diheteroaryloxyphosphine verwendet werden. Besonders bevorzugte Phosphinliganden sind Tris(o- oder m- oder p-tolyl)phosphin, Tris(o- oder m- oder p-anisyl)phosphin, Tris(o- oder m- oder p-fluorphenyl)phosphin, Tris(o- oder m- oder p-chlorphenyl)phosphin, Tris(2,6-dimethylphenyl)phosphin, Tris(2,6-dimethoxyphenyl)phosphin, Tris(mesityl)phosphin, Tris(2,4,6-trimethoxyphenyl)phosphin, Tris(pentafluorphenyl)phosphin, *tert*-Butyl-di*o*-tolylphosphin, Di-*tert*-butyl-*o*-tolylphosphin, Dicyclohexyl-2-biphenylphosphin, Di-*tert*-butyl-2-biphenylphosphin, Triethylphosphin, Tri-*iso*-propyl-phosphin, Tricyclohexylphosphin, Tri-*tert*-butylphosphin, Tri-*tert*-pentylphosphin, Bis(di-*tert-*butylphosphino)methan und 1,1'-Bis(di-*tert*-butylphosphino)ferrocen.

Weiterhin kommen auch allgemein diskrete Verbindungen von Palladium(0) oder Palladium(II) mit den oben beschriebenen zusätzlichen Liganden in Frage.

Auch der Einsatz sulfonierter Liganden zur Bildung wasserlöslicher Palladiumkomplexe ist möglich (z. B. EP 0694530). Dies kann Vorteile bei der Aufarbeitung bieten, da hierbei der wasserlösliche Katalysator einfach durch Phasentrennung abgetrennt werden kann und keine aufwändigen Extraktionsverfahren nötig sind.

Ebenso möglich ist der Einsatz heterogener bzw. immobilisierter Palladiumkatalysatoren (z. B. WO 04/016348). Während heterogene Katalysatoren bei einer Reaktionsführung gemäß dem Stand der Technik allgemein den Nachteil bieten, dass durch die kleinere Oberfläche im Vergleich zur homogenkatalytischen Reaktion niedrigere Umsätze und vor allem geringere Selektivitäten erzielt werden, ist im Mikroreaktor eine heterogenkatalytische Reaktionsführung besser möglich, da hier das Verhältnis Oberfläche zu Volumen deutlich größer ist als im Standardreaktor oder Kolben. Dabei können die heterogenen bzw. immobilisierten Palladiumkatalysatoren kolloidal, dispers, ungeträgert oder an verschiedene Trägermaterialien gebunden sein, bevorzugt an Kieselgur, Silicia, Aluminiumoxid, Kohle bzw. besonders bevorzugt auch an die Mikroreaktorwandung.

Weiterhin kommen Nickel und Nickelverbindungen, insbesondere Nickel(0)verbindungen, zum Einsatz. Hier eignen sich beispielsweise elementares Nickel bzw. auch disperses oder kolloidales metallisches Nickel, geträgert oder ungeträgert, wie Nickelschwamm, Nickel auf Kieselgur, Nickel auf Aluminiumoxid, Nickel auf Silica, Nickel auf Kohle, Nickel gebunden an die Mikroreaktorwandung, Nickel(II)carboxylate, insbesondere Nickel(II)acetat, Nickel(II)formiat und Nickel(II)oxalat, Nickel(II)ketoketonate, insbesondere Nickel(II)acetylacetonat, Nickel(II)halogenide, insbesondere Nickel(II)chlorid, -bromid und -iodid, Nickel(II)carbonat, Nickel(II)nitrat, Nickel(II)sulfat oder daraus ableitbare Komplexe wie Olefinnickel(II)halogenide, Allylnickel(II)halogenide, Additionsverbindungen des Typs NiL₂(Hal)₂ wobei Hal Chlor, Brom, Iod und L einem neutralen Liganden, wie z. B. Ammoniak, Acetonitril, Propionitril oder Benzonitril, entspricht, Bis(cyclooctadien)nickel(0), Tetrakis(triphenylphosphin)nickel(0) oder weitere Nickel(0)verbindungen.

Für manche der oben genannten Kupplungsreaktionen ist es hilfreich oder erforderlich, wenn zusätzlich zu den Monomeren und dem Katalysator noch eine Base eingesetzt wird. Die Wahl der Base hängt von der Kupplungsreaktion und der genauen Reaktionsführung ab. Als Base können alle dem Fachmann bekannten, für Kupplungsreaktionen organischer Verbindungen geeigneten Basen eingesetzt werden. Bevorzugte Basen sind organische Hydroxide, Alkali- und Erdalkalimetallhydroxide, -oxide, -carboxylate, -carbonate, -hydrogencarbonate, -phosphate, -hydrogenphosphate und -fluoride, insbesondere Natrium- und Kaliumhydroxid, -acetat, -carbonat, -hydrogencarbonat, -phosphat und -fluorid, oder auch Metallalkoholate; bevorzugt sind Phosphate bzw. Carbonate, aber auch organische Hydroxide, beispielsweise Tetraalkylammoniumhydroxid. Für wasserfreie Reaktionen wird wegen der besseren Löslichkeit der entsprechenden Salze in organischen Lösemitteln bevorzugt ein schwereres Alkalimetall als Gegenion eingesetzt, besonders bevorzugt Caesium. Weiterhin können als Base organische Amine, besonders bevorzugt Triethylamin, Diethylamin oder Tri-n-butylamin, oder Stickstoff-haltige, gegebenenfalls aromatische Heterocyclen, besonders bevorzugt Pyridin oder N-Methylpyrrolidon eingesetzt werden. Es können auch Mischungen der Basen verwendet werden.

Für das erfindungsgemäße Verfahren ist es wesentlich, dass die eingesetzten Monomere und gegebenenfalls auch der Katalysator, falls kein heterogener Katalysator eingesetzt wurde, in gelöster oder gegebenenfalls auch fein suspendierter Form vorliegen, bevorzugt in gelöster Form. Insbesondere auch um das Polymer als Reaktionsprodukt zu lösen, muss ein geeignetes Lösemittel verwendet werden. Die Lösemittel sind bevorzugt ausgewählt aus der Gruppe der aromatischen Lösemittel, insbesondere Toluol, Anisol, Chlorbenzol, Xylole, Mesitylen oder Phenylether, geradkettigen, verzweigten oder cyclischen Ether, insbesondere Diethylether, Methyl-tert-butylether, Tetrahydrofuran, Dioxan oder Polyethylenglycolether, N-haltigen heterocyclischen Lösemittel, insbesondere Pyridin, Alkohole, insbesondere Methanol, Ethanol, Propanol, iso-Propanol, tert-Butanol oder Ethylenglycol, dipolar aprotischen Lösemittel, insbesondere DMF, Dimethylacetamid, NMP (N-Methylpyrrolidon) oder DMSO, organischen Ester, Nitrile, insbesondere Benzonitril oder Acetonitril, Sulfoxide, organischen Amide und organischen Carbonate, halogenierten Lösemittel, insbesondere Dichlormethan, Chloroform, 1,2-Dichlorethan oder 1,1,2,2-Tetrachlorethan, oder geradkettigen, verzweigten oder cyclischen Kohlenwasserstoffe oder ein Gemisch aus wenigstens zwei der vorstehend genannten Lösemittel. Bevorzugt sind aromatische Lösemittel bzw. Lösemittelmischungen, die mindestens ein aromatisches Lösemittel enthalten.

Auch der Zusatz von Wasser kann sich als sinnvoll erweisen, beispielsweise um eine Base oder ein anorganisches Salz zu lösen. Dabei kann es sinnvoll sein, die Reaktion einphasig oder zweiphasig zu führen. Für zweiphasige Reaktionsführung kann es hilfreich sein, zusätzlich einen Phasentransferkatalysator zu verwenden. Weiterhin kann der Zusatz mindestens eines Lösemittels, das mit Wasser und mit der oranischen Phase mischbar ist, sinnvoll sein, so dass der Kontakt zwischen den in den verschiedenen Phasen gelösten Verbindungen erhöht wird.

Im Folgenden werden bevorzugte Ausführungsformen für die einzelnen Typen von Kupplungsreaktionen beschrieben.

Unter der Kupplung gemäß Suzuki wird die Kupplung eines aromatischen, heteroaromatischen oder vinylischen Borderivats mit einem aromatischen oder heteroaromatischen Halogenid oder Sulfonat in Anwesenheit einer Base unter Übergangsmetall-Katalyse verstanden. Dabei ist das Borderivat bevorzugt ausgewählt aus der Gruppe der Boronsäuren, Borinsäuren, Boronsäureanhydride oder offenkettigen oder cyclischen Boronsäureester, insbesondere Glycol- oder Pinakolester. Als Katalysatoren werden bevorzugt Palladiumverbindungen gewählt. Dabei sind die Liganden am Palladium für mehrphasige Reaktionen bevorzugt Triarylphosphine, insbesondere Triphenylphosphin und Tri-o-tolylphosphin. Als Lösemittel werden bevorzugt aromatische Lösemittel oder Ether verwendet. Als Basen haben sich Alkalimetallcarbonate und -phosphate als besonders geeignet erwiesen. Für die wasserfreie Suzuki-Kupplung werden bevorzugt Trialkylphosphinliganden, insbesondere Tri-tert-butylphosphin und Tricyclohexylphosphin in Verbindung mit CsF, KF oder Cs₂CO₃ als Base verwendet.

Unter der Kupplung gemäß Yamamoto wird die Kupplung zweier aromatischer oder heteroaromatischer Halogenide und/oder Sulfonate in Anwesenheit eines Übergangsmetall-Katalysators und gegebenenfalls eines Reduktionsmittels zur katalytischen Reaktionsführung verstanden. Für die Yamamoto-Kupplung sind alle reaktiven Gruppen Halogenide, insbesondere Bromide oder lodide, bzw. Sulfonate. Dabei kommen als Katalysator vor allem Nickelverbindungen in Frage, wobei es hier für die katalytische Reaktionsführung notwendig ist, ein Reduktionsmittel zuzufügen, welches das während der Reaktion gebildete Nickel(II) wieder zu Nickel(0) reduzieren kann. Als Reduktionsmittel eignen sich hier insbesondere unedle Metalle, beispielsweise Zink oder Mangan, oder anorganische Reduktionsmittel, wie z. B. Hydrazin. Der Zusatz einer Base ist nicht erforderlich.

Unter der Kupplung gemäß Hartwig-Buchwald wird die Kupplung eines primären oder sekundären Amins mit einem aromatischen oder heteroaromatischen Halogenid oder Sulfonat in Anwesenheit einer Base unter Übergangsmetall-Katalyse verstanden. Als Katalysator werden hier wiederum überwiegend Palladiumverbindungen gewählt, wie sie oben bereits ausgeführt sind. Durch die Wahl der Liganden kann gesteuert werden, ob die Reaktion bis zum sekundären oder tertiären Amin abläuft. Für die Bildung sekundärer Amine werden bevorzugt zweizähnige Arylphosphine als Liganden eingesetzt, insbesondere Bis(1,2-diphenylphosphino)ethan (dppe), Bis(1,3-diphenylphosphino)propan (dppp), Bis(1,1'-diphenylphosphino)ferrocen (dppf) oder 2,2'-Bis(diphenylphosphino)-1,1'-binaphthyl (BINAP). Für die Bildung tertiärer Amine werden bevorzugt elektronenreiche, sterisch anspruchsvolle Phosphine oder Halogenphosphine eingesetzt, beispielsweise Trialkylphosphine, insbesondere Tri-tert-butylphosphin, Dialkylhalogenphosphine, insbesondere Di-tert-butylchlorphosphin, Dialkoxyhalogenphosphine, Alkyldihalogenphosphine, insbesondere tert-Butyl-dichlorphosphin, und Alkoxydihalogenphosphine. Dabei wird die Reaktion im Allgemeinen wasserfrei in aromatischen Kohlenwasserstoffen, insbesondere Toluol oder Xylol, unter Zusatz einer starken Base, bevorzugt einem Alkalimetallalkoholat, insbesondere NaOtBu, geführt.

Unter der Kupplung gemäß Stille wird die Kupplung eines aromatischen oder heteroaromatischen Zinn-Derivats mit einem aromatischen oder heteroaromatischen Halogenid oder Sulfonat unter Übergangsmetall-Katalyse verstanden. Dabei ist das Zinn-Derivat bevorzugt eine Trialkylzinn-Gruppe, insbesondere eine Tributylzinn-oder eine Trimethylzinn-Gruppe. Als Katalysatoren werden vor allem die oben für die Suzuki-Kupplung ausgeführten Palladiumverbindungen und Liganden verwendet. Als Liganden eignen sich hier weiterhin auch besonders Triarylarsine und Trifurylphosphine. Der Zusatz einer Base ist für die Stille-Kupplung nicht erforderlich. Die Reaktion wird bevorzugt in einem aromatischen Kohlenwasserstoff, insbesondere Toluol oder Xylol, oder in einem dipolar aprotischen Lösemittel, insbesondere DMF, durchgeführt.

Unter der Kupplung gemäß Heck wird die Kupplung einer Verbindung mit vinylischem Wasserstoff mit einem aromatischen oder heteroaromatischen Halogenid oder Sulfonat in Anwesenheit einer Base unter Übergangsmetall-Katalyse verstanden. Dabei kommen als Katalysator die Palladiumvorstufen und Liganden in Frage, die oben bereits für die Suzuki-Kupplung erwähnt wurden. Als Katalysator haben sich auch Palladium-Nanopartikel, belegt mit Aminocarbonsäuren, bewährt, wie beispielsweise in WO 98/42644 beschrieben. Auch Carben-Komplexe wurden erfolgreich als Katalysotoren zur Heck-Kupplung eingesetzt. Der Zusatz stickstoffhaltiger Additive, insbesondere Aminocarbonsäuren, und metallhaltiger Additive, insbesondere Eisen bzw. Eisenverbindungen, kann sich hier sehr positiv auf die Ausbeute auswirken, wie beispielsweise in WO 02/10093 beschrieben. Als Base eignen sich insbesondere Amine und Alkalimetallcarbonate und -hydrogencarbonate. Als Lösemittel werden bevorzugt dipolar-aprotische Lösemittel und Alkohole verwendet.

Unter der Kupplung gemäß Sonogashira wird die Kupplung einer Verbindung mit acetylenischem Wasserstoff mit einem aromatischen oder heteroaromatischen Halogenid oder Sulfonat unter Übergangsmetall-Katalyse und gegebenenfalls unter Zusatz einer weiteren Metallverbindung, insbesondere einer Kupfer(I)verbindung, in Anwesenheit einer Base verstanden. Als Katalysatoren werden vor allem die oben für die Suzuki-Kupplung ausgeführten Palladiumverbindungen verwendet, wobei hier der Zusatz eines Kupfersalzes, insbesondere eines Kupfer(I)salzes, bevorzugt Kupfer(I)iodid, erforderlich ist. Als Base werden insbesondere aliphatische oder aromatische Amine zugesetzt.

Unter der Kupplung gemäß Negishi wird die Kupplung einer aromatischen oder vinylischen Zink-Verbindung mit einem aromatischen oder heteroaromatischen Halogenid oder Sulfonat unter Übergangsmetall-Katalyse, bevorzugt Palladium-Katalyse, in Anwesenheit einer Base verstanden.

Unter der Kupplung gemäß Hiyama wird die Kupplung einer aromatischen oder heteroaromatischen Silylverbindung, die noch mindestens ein Fluoratom an das Silicium gebunden trägt, mit einem aromatischen oder heteroaromatischen Halogenid oder Sulfonat unter Übergangsmetall-Katalyse, bevorzugt Palladium-Katalyse, in Anwesenheit einer Base verstanden.

Unter der Grignard-Kreuzkupplung (Kupplung gemäß Kumada) wird die Kupplung einer aromatischen, heteroaromatischen oder vinylischen Grignard-Verbindung mit einem aromatischen oder heteroaromatischen Halogenid oder Sulfonat unter Palladium-Katalyse in Anwesenheit einer Base verstanden.

Die gewählte Konzentration der Reaktionskomponenten hängt stark von der jeweiligen Reaktion, von der Struktur des jeweils erzeugten Polymers und vom gewünschten Molekulargewicht des Polymers ab. Dabei wird die Reaktion wegen der dabei auftretenden Viskositätserhöhung im Allgemeinen bei Konzentrationen im Bereich von weniger als 1 mol/l (bezogen auf die zu knüpfenden C-C- bzw. C-N-Bindungen) durchgeführt, bevorzugt bei Konzentrationen von weniger als 0.2 mol/l.

In einer weiteren Ausführungsform des erfindungsgemäßen Verfahrens werden 0.00001 bis 50 mol%, bevorzugt 0.0001 bis 10 mol%, besonders bevorzugt 0.001 bis 1 mol% des Katalysators, bezogen auf die Anzahl der zu bildenden C-C- bzw. C-N-Bindungen, eingesetzt.

Bei Reaktionen gemäß Schema 1 wird das Verhältnis der Monomeren bevorzugt so gewählt, dass die Abgangsgruppen X und Y in äquimolarem Verhältnis vorhanden sind. Dadurch lassen sich die höchsten Molekulargewichte erzielen. Jedoch kann auch eine der beiden Monomersorten in einem leichten Überschuss eingesetzt werden. Dies kann beispielsweise sinnvoll sein, um das Molekulargewicht des Polymers im gewünschten Bereich einzustellen.

Die Selektivität der Reaktion hängt außer von der Konzentration der eingesetzten Reagenzien von einer Reihe weiterer Parameter ab, wie z. B. der Temperatur, der Art der Austrittsgruppe, der Art des Katalysators oder der Verweilzeit. Dem Fachmann ist es möglich, die verschiedenen Parameter auf die jeweilige Reaktion und die jeweils eingesetzten Monomere so abzustimmen, dass das Polymer im gewünschten Molekulargewichtsbereich erhalten wird.

Eine weitere mögliche Ausführung für Reaktionen gemäß Schema 1 mit unterschiedlichen Gruppen X und Y (also alle der genannten Reaktionen außer die Kupplung gemäßYamamoto) ist deren Durchführung in mindestens zwei Stufen, wobei in der ersten Stufe ein Überschuss an einem der Monomeren eingesetzt wird, so dass ein Oligomer mit einer ersten Zusammensetzung gebildet wird, welches wenige (im Allgemeinen zwischen 3 und 20) Wiederholeinheiten besitzt. Darauf folgend werden in einer oder mehreren weiteren Stufe(n) die restlichen Monomere zugegeben, so dass schließlich das Verhältnis der beiden unterschiedlichen reaktiven Gruppen X und Y 1 : 1 beträgt. Bevorzugt ist die Monomerzusammensetzung der zweiten bzw. weiterer Stufen unterschiedlich zu derjenigen der ersten Stufe, wodurch Polymere entstehen, die eine blockartige Struktur aufweisen. Wie dies genau durchgeführt werden kann und welcher Aufbau dabei sinnvoll ist, ist beispielsweise in DE 10337077.3 beschrieben. Dabei werden bevorzugt alle aufeinander folgenden Reaktionsschritte im Mikroreaktor bzw. in aneinander gereihten Mikroreaktoren durchgeführt.

Bei einer Ausführungsform der Erfindung werden der Reaktionsmischung bereits zu Beginn der Reaktion außer den oben genannten Monomeren weitere monofunktionelle Verbindungen zugesetzt, die ein Kettenende bei der Polykondensation darstellen. Dies kann sinnvoll sein, um das Molekulargewicht des Polymers einzustellen und zu begrenzen.

Bei einer weiteren Ausführungsform der Erfindung enthält die Reaktionsmischung mindestens ein Monomer, das mindestens drei reaktive Gruppen X und/oder Y trägt und damit zu Verzweigungen der Polymerkette führt. Der sinnvolle Einsatz derartiger Monomere ist beispielsweise in DE 102004032527.8 beschrieben.

Es hat sich als bevorzugt herausgestellt, am Ende der Reaktion im selben Reaktionsschritt oder nach der Isolierung des Polymers in einem separaten Reaktionsschritt ein so genanntes Endcapping durchzuführen, d. h. monofunktionelle Verbindungen zuzugeben, die eventuelle reaktive Endgruppen der Polymere abfangen. Ebenso hat es sich als sinnvoll erwiesen, gegebenenfalls andere Nachbehandlungen vorzunehmen, um den Gehalt an bestimmten Verunreinigungen zu verringern, wie beispielsweise in EP 04023475.9 beschrieben. Bevorzugt wird das Endcapping bzw. die Nachbehandlung ebenfalls im Mikroreaktor durchgeführt.

Am Ende der Reaktion kann das Polymer durch gängige Reinigungsverfahren weiter gereinigt werden. Für die Verwendung in hochwertigen Anwendungen (z. B. polymeren Leuchtdioden) sollte in der Regel die Verunreinigung mit organischen (z. B. Oligomeren) und anorganischen Substanzen (z. B. Katalysatorreste, Basenreste) auf ein möglichst geringes Maß gebracht werden. Dies geschieht für den homogenen Katalysator bevorzugt durch Extraktion, gegebenenfalls mit Komplexbildnern, bevorzugt mit Cyanid oder Thiocarbamat, durch Ionenaustauscher oder andere Verfahren und kann gegebenenfalls auch bei erhöhter Temperatur durchgeführt werden. Für die Entfernung weiterer anorganischer Verunreinigungen eignet sich beispielsweise auch die Extraktion mit anorganischen Mineralsäuren. Besonders bevorzugt werden die Extraktionsschritte ebenfalls im Mikroreaktor durchgeführt. Die Phasentrennung kann dann beispielsweise in einem Entmischelement durchgeführt werden. Ein möglicher Aufbau für ein solches Entmischelement ist ein Kanal mit einer hydrophilen Wand, beispielsweise Glas, und einer hydrophoben Wand, beispielsweise Teflon. Derartige Extraktionsschritte können sinnvollerweise auch mehrfach hintereinander durch in Reihe geschaltete Misch- und Entmischelemente in einem oder mehreren Mikroreaktorsystemen durchgeführt werden.
Eine weitere Möglichkeit zur Reinigung ist der Einsatz eines an der Mikroreaktorwandung geträgerten lonentauschermaterials, gegebenenfalls in Kombination mit einem Verwirbler für einen besseren Kontakt mit der Wandung. Dies ist im Mikroreaktor deutlich effizienter einzusetzen als in Verfahren gemäß dem Stand der Technik, da durch das größere Verhältnis der Oberfläche zum Volumen ein deutlich besserer Kontakt zur Reaktorwandung gegeben ist.

Die Isolierung und das Ausfällen bzw. Umfällen der Polymere wird vorzugsweise batchweise außerhalb des Mikroreaktors durchgeführt.

Das erfindungsgemäße Verfahren bietet die folgenden Vorteile gegenüber Verfahren gemäß dem Stand der Technik:
1. Bei dem erfindungsgemäßen Verfahren ist die Gefahr für Mensch und Umwelt durch austretende Chemikalien erheblich verringert und führt somit zu einer erhöhten Sicherheit beim Umgang mit Gefahrstoffen und Lösemitteln.
2. Die Kupplung von organischen Verbindungen nach dem erfindungsgemäßen Verfahren ermöglicht eine bessere Kontrolle der Reaktionsbedingungen, wie z. B. Reaktionsdauer und Reaktionstemperatur, als dies in herkömmlichen Verfahren möglich ist. Dadurch ist der Reaktionsverlauf der Kupplungsreaktion bei dem erfindungsgemäßen Verfahren sehr schnell und genau regelbar. Die Polymere lassen sich so im gewünschten Molekulargewichtsbereich erhalten, wobei die Reproduzierbarkeit gegenüber dem Stand der Technik deutlich verbessert ist.
3. Besonders vorteilhaft ist weiterhin, dass das erfindungsgemäße Verfahren kontinuierlich geführt werden kann. Hierdurch ist es im Vergleich zu herkömmlichen Verfahren schneller und kostengünstiger, beliebige Mengen der gewünschten Polymere im gewünschten Molekulargewichtsbereich herzustellen.
4. Die Reinigung der Polymere ist deutlich effizienter als durch Verfahren gemäß dem Stand der Technik. Da die Reinheit der Polymere eine ganz entscheidende Rolle für die Funktion in organischen elektronischen Vorrichtungen spielt, ist dies ein erheblicher Vorteil gegenüber Verfahren gemäß dem Stand der Technik.

Besonders überraschend und unerwartet ist jedoch, dass die Reaktionsführung dieser Polykondensationen im Mikroreaktor gelingt, insbesondere auch zur Synthese vollständig konjugierter Polyarylene, deren steife Struktur und hohe Lösungsviskosität Probleme beim Lösungstransport in den engen Kanälen des Mikroreaktors nahe gelegt hätten. Dieses Vorurteil wurde auch durch den Stand der Technik nahe gelegt, da dort bereits übergangsmetallkatalysierte Kupplungsreaktionen mehrfach beschrieben wurden, nicht jedoch deren Anwendung auf entsprechende Polykondensationen, so dass dies die Vermutung aufkommen ließ, dass derartige Polykondensationen technisch nicht zu verwirklichen seien.

Weiterer Gegenstand der Erfindung sind Polymere, erhalten durch das erfindungsgemäße Verfahren.

Nochmals ein weiterer Gegenstand der vorliegenden Erfindung ist die Verwendung dieser Polymere in organischen elektronischen Vorrichtungen.

Ein nochmals weiterer Gegenstand der Erfindung sind organische elektronische Vorrichtungen, enthaltend ein oder mehrere dieser Polymere. Dabei sind die organischen elektronischen Vorrichtungen bevorzugt ausgewählt aus der Gruppe der polymeren organischen Leuchtdioden (PLEDs), organischen integrierten Schaltungen (O-ICs), organischen Feld-Effekt-Transistoren (O-FETs), organischen Dünnfilmtransistoren (O-TFTs), organischen Solarzellen (O-SCs), organischen Feld-Quench-Devices (O-FQDs) oder auch organischen Laserdioden (O-Laser), besonders bevorzugt polymere organische Leuchtdioden.

## Patentansprüche

1. Verfahren zur Herstellung von Polymeren oder Oligomeren durch C-C- bzw. C-N-Kupplungsreaktionen unter Übergangsmetallkatalyse in einem Lösemittel oder Lösemittelgemisch gegebenenfalls unter Zusatz mindestens einer Base und/oder mindestens eines Additivs, **dadurch gekennzeichnet, dass** die Reaktion in einem Mikroreaktor durchgeführt wird.

2. Verfahren gemäß Anspruch 1, **dadurch gekennzeichnet, dass** der Mikroreaktor ein Volumen ≤ 1000 µl aufweist.

3. Verfahren gemäß Anspruch 1 und/oder 2, **dadurch gekennzeichnet, dass** die Kanäle des Mikroreaktors einen Durchmesser von 10 bis 2000 µm aufweisen.

4. Verfahren gemäß einem oder mehreren der Ansprüche 1 bis 3, **dadurch gekennzeichnet, dass** die Lösungen so in den Mikroreaktor gepumpt werden, dass sie diesen mit einer Durchflussgeschwindigkeit von 0.01 µl/min bis 100 ml/min durchströmen.

5. Verfahren gemäß einem oder mehreren der Ansprüche 1 bis 4, **dadurch gekennzeichnet, dass** das Reaktionsgemisch durch zwei oder mehr in Reihe geschaltete Mikroreaktoren geführt wird.

6. Verfahren gemäß einem oder mehreren der Ansprüche 1 bis 5, **dadurch gekennzeichnet, dass** das Reaktionsgemisch durch zwei oder mehr parallel angeordnete Mikroreaktoren geleitet wird.

7. Verfahren gemäß einem oder mehreren der Ansprüche 1 bis 6, **dadurch gekennzeichnet, dass** die Verweilzeit der Reaktionslösung im Mikroreaktor ≤ 1 Stunde beträgt.

8. Verfahren gemäß einem oder mehreren der Ansprüche 1 bis 7, **dadurch gekennzeichnet, dass** es bei einer Temperatur von -80 bis +250 °C durchgeführt wird.

9. Verfahren gemäß einem oder mehreren der Ansprüche 1 bis 8, **dadurch gekennzeichnet, dass** es kontinuierlich durchgeführt wird.

10. Verfahren gemäß einem oder mehreren der Ansprüche 1 bis 9, **dadurch gekennzeichnet, dass** der Reaktionverlauf durch Viskosimetrie verfolgt und gesteuert wird.

11. Verfahren gemäß einem oder mehreren der Ansprüche 1 bis 10, **dadurch gekennzeichnet, dass** das Übergangsmetall bzw. die Übergangsmetallverbindung ausgewählt ist aus Palladium bzw. Palladiumverbindungen, Nickel bzw. Nickelverbindungen, Cobalt bzw. Cobaltverbindungen oder Eisen bzw. Eisenverbindungen.

12. Verfahren gemäß einem oder mehreren der Ansprüche 1 bis 11, **dadurch gekennzeichnet, dass** die übergangsmetallkatalysierte Kupplungsreaktion ausgewählt ist aus der Gruppe der Suzuki-Kupplungen, der Yamamoto-Kupplungen, der Hartwig-Buchwald-Kupplungen, der Stille-Kupplungen, der Heck-Kupplungen, der Sonogashira-Kupplungen, der Negishi-Kupplungen, der Hiyama-Kupplungen und der Grignard-Kreuzkupplungen.

13. Verfahren gemäß einem oder mehreren der Ansprüche 1 bis 12, **dadurch gekennzeichnet, dass** die Polykondensationsreaktion der in Schema 1 oder Schema 2 dargestellten Reaktion folgt:
n X-Ar-X + n Y-M-Y → ---[Ar-M]ₙ--- + X-Y (Schema 1)
n X-Ar-(M)ₘ-Y → ---[Ar-(M)ₘ]ₙ--- (Schema 2)
wobei die verwendeten Symbole und Indizes die folgende Bedeutung haben:
X ist bei jedem Auftreten gleich oder verschieden Chlor, Brom, Iod, Fluoralkylsulfonat oder Perfluoralkylsulfonat;
Y ist bei jedem Auftreten gleich oder verschieden X oder B(OH)₂, B(OR)₂, BR₂, SnR₃, NR-H, MgCl, MgBr, Mgl, SiR₂F, SiRF₂, ZnCl, ZnBr, Znl oder auch H, falls dieses direkt an eine vinylische oder acetylenische Bindung von M gebunden ist;
Ar ist bei jedem Auftreten gleich oder verschiedenen ein bivalentes aromatisches oder heteroaromatisches Ringsystem mit 2 bis 60 C-Atomen, welches auch durch einen oder mehrere Reste R oder OR substituiert sein kann;
M ist bei jedem Auftreten gleich oder verschieden eine Gruppe Ar, oder M ist gleich oder verschieden eine organische Gruppe mit 1 bis 60 C-Atomen, bevorzugt eine Gruppe Ar, die durch eine oder mehrere Vinyl- oder Acetylengruppen substituiert ist;
R ist bei jedem Auftreten gleich oder verschieden H, eine geradkettige, verzweigte oder cyclische Alkylkette mit 1 bis 40 C-Atomen, in der auch ein oder mehrere nicht benachbarte C-Atome durch N-R¹, O, S, O-CO-O, CO-O, -CR¹=CR¹-, -C≡C- ersetzt sein können und in der auch ein oder mehrere H-Atome durch F, Cl, Br, I oder CN ersetzt sein können, oder ein aromatisches oder heteroaromatisches Ringsystem mit 2 bis 60 C-Atomen, welches auch durch einen oder mehrere nicht-aromatische Reste R substituiert sein kann; dabei können auch zwei oder mehrere der Reste R miteinander ein Ringsystem bilden;
R¹ ist bei jedem Auftreten gleich oder verschieden H oder ein aliphatischer oder aromatischer Kohlenwasserstoffrest mit 1 bis 20 C-Atomen;
n ist bei jedem Auftreten eine Zahl zwischen 10 und 10000;
m ist bei jedem Auftreten 0 oder 1;
die gestrichelte Bindung bedeutet dabei die Verknüpfung in die Polymerkette.

14. Verfahren gemäß Anspruch 13, **dadurch gekennzeichnet, dass** bei einer Reaktion alle Gruppen X gleich gewählt sind und alle Gruppen Y gleich gewählt sind.

15. Verfahren gemäß einem oder mehreren der Ansprüche 1 bis 14, **dadurch gekennzeichnet, dass** als Katalysator bzw. Katalysatorvorstufe wenigstens eine Verbindung eingesetzt wird, die Palladium in der Oxidationsstufe 0 enthält, bevorzugt Tetrakis(triarylphosphin)palladium(0) oder Tris(dibenzylidenaceton)dipalladium(0).

16. Verfahren gemäß einem oder mehreren der Ansprüche 1 bis 14, **dadurch gekennzeichnet, dass** als Katalysator bzw. Katalysatorvorstufe wenigstens eine Verbindung, die Palladium in der Oxidationsstufe +II enthält, gegebenenfalls in Gegenwart wenigstens eines Liganden eingesetzt wird, bevorzugt Palladium(II)halogenide, Palladium(II)carboxylate, Dichlor-bis(triphenylphosphin)palladium(II), Palladium(II)-β-ketoketonate, Nitrilpalladium(II)halogenide, Allylpalladiumhalogenide, Olefinpalladiumhalogenide oder ein Gemisch aus wenigstens zwei dieser Verbindungen.

17. Verfahren gemäß Anspruch 16, **dadurch gekennzeichnet, dass** zusätzliche Liganden zugesetzt werden, ausgewählt aus der Gruppe der Triarylphosphine, Triheteroarylphosphine, Diarylalkylphosphine, Diheteroarylalkylphosphine, Aryldialkylphosphine, Heteroaryldialkylphosphine oder Trialkylphosphine, wobei die Substituenten am Phosphor gleich oder verschieden, chiral oder achiral sein können, wobei ein oder mehrere der Substituenten die Phosphorgruppen mehrerer Phosphine verknüpfen können und wobei diese Verknüpfungen auch über ein oder mehrere Metallatome erfolgen können; der Halogenphosphine, Dihalogenphosphine, Alkoxyphosphine, Aryloxyphosphine, Heteroaryloxyphosphine, Dialkoxyphosphine, Diaryloxyphosphine oder Diheteroaryloxyphosphine verwendet werden.

18. Verfahren gemäß einem oder mehreren der Ansprüche 1 bis 14, **dadurch gekennzeichnet, dass** heterogene bzw. immobilisierte Palladiumkatalysatoren eingesetzt werden.

19. Verfahren gemäß einem oder mehreren der Ansprüche 1 bis 14, **dadurch gekennzeichnet, dass** Nickel bzw. Nickelverbindungen als Katalysator eingesetzt werden.

20. Verfahren gemäß Anspruch 19, **dadurch gekennzeichnet, dass** elementares Nickel bzw. auch disperses oder kolloidales metallisches Nickel, geträgert oder ungeträgert, Nickelschwamm, Nickel auf Kieselgur, Nickel auf Aluminiumoxid, Nickel auf Silica, Nickel auf Kohle, Nickel(II)carboxylate, Nickel(II)ketoketonate, Nickel(II)halogenide, Nickel(II)carbonat, Nickel(II)nitrat, Nickel(II)sulfat, Olefinnickel(II)halogenide, Allylnickel(II)halogenide, Additionsverbindungen des Typs NiL₂(Hal)₂, wobei Hal Chlor, Brom, Iod und L einem neutralen Liganden, entspricht, Bis(cyclooctadien)nickel(0), Tetrakis(triphenylphosphin)nickel(0) oder weitere Nickel(0)verbindungen als Katalysator verwendet werden.

21. Verfahren gemäß einem oder mehreren der Ansprüche 1 bis 20, **dadurch gekennzeichnet, dass** eine Base zugesetzt wird.

22. Verfahren gemäß Anspruch 21, **dadurch gekennzeichnet, dass** die Base ausgewählt ist aus Alkali- und Erdalkalimetallhydroxiden, -oxiden, -carboxylaten, -carbonaten, -hydrogencarbonaten, -phosphaten, -hydrogenphosphaten und -fluoriden, Metallalkoholaten, organischen Hydroxiden, organischen Aminen oder ein Stickstoff-haltigen, gegebenenfalls aromatischen Heterocyclen oder auch Mischungen dieser Basen.

23. Verfahren gemäß einem oder mehreren der Ansprüche 1 bis 22, **dadurch gekennzeichnet, dass** das Lösemittel ausgewählt ist aus der Gruppe der aromatischen Lösemittel, geradkettigen, verzweigten oder cyclischen Ether, N-haltigen heterocyclischen Lösemittel, Alkohole, dipolar aprotischen Lösemittel, organischen Ester, Nitrile, Sulfoxide, organischen Amide, organischen Carbonate, halogenierten Lösemittel oder geradkettigen, verzweigten oder cyclischen Kohlenwasserstoffe, oder ein Gemisch aus wenigstens zwei der vorstehend genannten Lösemittel ist.

24. Verfahren gemäß einem oder mehreren der Ansprüche 1 bis 23, **dadurch gekennzeichnet, dass** die Reaktion unter Zusatz von Wasser durchgeführt wird.

25. Verfahren gemäß einem oder mehreren der Ansprüche 1 bis 24, **dadurch gekennzeichnet, dass** 0.00001 bis 50 mol% des Katalysators, bezogen auf die Anzahl der zu bildenden C-C- bzw. C-N-Bindungen, eingesetzt werden.

26. Verfahren gemäß einem oder mehreren der Ansprüche 1 bis 25, **dadurch gekennzeichnet, dass** die Reinigung durch Extraktion, gegebenenfalls mit Komplexbildnern, durch Ionenaustauscher, die gegebenenfalls an die Reaktorwandung gebunden sind, oder durch Extraktion mit anorganischen Mineralsäuren und gegebenenfalls bei erhöhter Temperatur durchgeführt wird.

27. Verfahren gemäß Anspruch 26, **dadurch gekennzeichnet, dass** die Reinigung in einem oder mehreren Misch- und Entmischschritten im Mikroreaktor erfolgt.

28. Polymere, erhalten durch ein Verfahren gemäß einem oder mehreren der Ansprüche 1 bis 27.

29. Verwendung von Polymeren gemäß Anspruch 28 in organischen elektronischen Vorrichtungen.

30. Organische elektronische Vorrichtungen, enthaltend ein oder mehrere Polymere gemäß Anspruch 28.

31. Organiche elektronische Vorrichtung gemäß Anspruch 30, ausgewählt aus der Gruppe der polymeren organischen Leuchtdioden (PLEDs), organischen integrierten Schaltungen (O-ICs), organischen Feld-Effekt-Transistoren (O-FETs), organischen Dünnfilmtransistoren (O-TFTs), organischen Solarzellen (O-SCs), organischen Feld-Quench-Devices (O-FQDs) oder organischen Laserdioden (O-Laser).
